(19) Europäisches Patentamt / European Patent Office / Office européen des brevets

(11) **EP 3 907 675 B1**

(12) **EUROPEAN PATENT SPECIFICATION**

(45) Date of publication and mention
of the grant of the patent:
**23.07.2025   Bulletin 2025/30**

(21) Application number: **20173176.7**

(22) Date of filing: **06.05.2020**

(51) International Patent Classification (IPC):
*G06Q 10/04* *(2023.01)*

(52) Cooperative Patent Classification (CPC):
**G06Q 10/04**

(54) **COMPUTER IMPLEMENTED METHOD FOR CALCULATING A TRAVEL TIME DISTRIBUTION OF A VEHICLE PATH FOR A DRIVER ASSISTANCE FUNCTION OF THE VEHICLE, SYSTEM, COMPUTER PROGRAM AND COMPUTER-READABLE DATA CARRIER**

COMPUTERIMPLEMENTIERTES VERFAHREN ZUR BERECHNUNG EINER REISEZEITVERTEILUNG EINES FAHRZEUGPFADES FÜR EINE FAHRERASSISTENZFUNKTION DES FAHRZEUGS, SYSTEM, COMPUTERPROGRAMM UND COMPUTERLESBARER DATENTRÄGER

PROCÉDÉ MIS EN OEUVRE PAR ORDINATEUR POUR CALCULER UNE DISTRIBUTION DE TEMPS DE TRAJET D'UN TRAJET DE VÉHICULE POUR UNE FONCTION D'AIDE À LA CONDUITE DU VÉHICULE, SYSTÈME, PROGRAMME INFORMATIQUE ET SUPPORT DE DONNÉES LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.11.2021   Bulletin 2021/45**

(73) Proprietor: **Bayerische Motoren Werke Aktiengesellschaft
80809 München (DE)**

(72) Inventors:
 • **Samara, Adam
   80805 München (DE)**
 • **Rempe, Felix
   80796 München (DE)**
 • **Fastenrath, Ulrich
   85399 Hallbergmoos (DE)**

(56) References cited:
 • **MIN CHEN ET AL: "A copula-based approach for estimating the travel time reliability of urban arterial", TRANSPORTATION RESEARCH PART C:EMERGING TECHNOLOGIES, vol. 82, 1 September 2017 (2017-09-01), GB, pages 1 - 23, XP055730571, ISSN: 0968-090X, DOI: 10.1016/ j.trc.2017.06.007**
 • **WANG YI ET AL: "Dependent Discrete Convolution Based Probabilistic Load Flow for the Active Distribution System", IEEE TRANSACTIONS ON SUSTAINABLE ENERGY, IEEE, USA, vol. 8, no. 3, 1 July 2017 (2017-07-01), pages 1000 - 1009, XP011653322, ISSN: 1949-3029, [retrieved on 20170619], DOI: 10.1109/ TSTE.2016.2640340**
 • **ADAM SAMARA ET AL: "Modelling arterial travel time distribution using copulas", ARXIV.ORG, CORNELL UNIVERSITY LIBRARY, 201 OLIN LIBRARY CORNELL UNIVERSITY ITHACA, NY 14853, 7 May 2020 (2020-05-07), XP081670525**

**Description**

The invention relates to a computer implemented method for calculating a travel time distribution of a vehicle path for a driver assistance function of the vehicle. The invention further relates to a system for calculating a travel time distribution of a vehicle path for a driver assistance function of the vehicle. In addition, the invention relates to a computer program and a computer-readable data carrier.

Travel time reliability is one of the key indicators for the performance of transportation systems. It has been increasingly recognized as an important measure for assessing the operation efficiency of road facilities, evaluating alternative traffic management strategies and providing travelers with timely and reliable route guidance.

Travel time reliability is defined as the consistency or dependability in travel times, as measured from day to day and/or across different times of the day. The analysis of travel time reliability is as important, if not even more important, than the traditional analysis of average travel time. In order to assess travel time reliability, travel time distribution needs to be determined first. Travel time distribution is necessary for measuring the probability of arriving on time and finding a reliable path for risk-averse travelers.

Prior art document "A copula-based approach for estimating the travel time reliability of urban arterial (Chen et al.)" discloses that path TTD estimation is the preliminary preparation for TTR analysis. In general, there are two approaches for estimating path TTD. One is to identify the best statistical model for fitting travel time observations, the other is to a model travel time observations for path TTD prediction.

Prior art document "Dependent Discrete Convolution Based Probabilistic Load Flow for the Active Distribution System" discloses the calculation of the joint probability density distribution by means of a dependent discrete convolution.

It is therefore an object of the present invention to provide a computer implemented method for calculating a travel time distribution of a vehicle path for a driver assistance function of the vehicle capable of calculating said travel time distribution accurately and in reasonable time, making it feasible for real world application.

The object is solved by the computer implemented method for calculating a travel time distribution of a vehicle path for a driver assistance function of the vehicle of claim 1, the system for calculating a travel time distribution of a vehicle path for a driver assistance function of the vehicle of claim 6, the computer program of claim 7 and the computer-readable data carrier of claim 8. Further developments and advantageous embodiments are defined in the dependent claims.

The computer implemented method for calculating a travel time distribution of a vehicle path for a driver assistance function of the vehicle comprises receiving, in particular by a server via a wireless connection, travel time data of a plurality of other vehicles for a plurality of road segments along the selected path of the vehicle.

The method further comprises selecting travel time data of at least a neighboring first road segment and second road segment along the selected path of the vehicle. In addition, the method comprises discretizing travel time distributions for the neighboring at least first road segment and second road segment along the selected path of the vehicle.

Moreover, the method comprises calculating a dependence-factor of a dependency between the first road segment and the second road segment, wherein the dependence-factor incorporates a copula-based correlation between the first road segment and the second road segment, and performing a discrete convolution dependent upon the dependence-factor to calculate the travel time distribution of the vehicle path.

The system for calculating a travel time distribution of a vehicle path for a driver assistance function of the vehicle comprises means for receiving, in particular by a server via a wireless connection, travel time data of a plurality of other vehicles for a plurality of road segments along the selected path of the vehicle.

The system further comprises means for selecting travel time data of at least a neighboring first road segment and second road segment along the selected path of the vehicle and means for discretizing travel time distributions for the neighboring at least first road segment and second road segment along the selected path of the vehicle.

In addition, the system comprises means for calculating a dependence-factor of a dependency between the first road segment and second road segment, wherein the dependence-factor incorporates a copula-based correlation between the first road segment and the second road segment, and means for performing a discrete convolution dependent upon the dependence-factor to calculate the travel time distribution of the vehicle path.

In addition, the computer program comprises program code to perform the method according to the present invention when the computer program is executed on a computer.

Moreover, the computer-readable data carrier contains program code of a computer program for performing the method according to the present invention when the computer program is executed on a computer.

It is an idea of the present invention to use dependent discrete convolution for estimating a path travel time distribution from individual segment travel time distributions by using copulas to characterize the correlation between segments. The path travel time distribution estimated by the dependent discrete convolution is accurate and allows for the calculation of the path travel time distribution in a reasonable time thus making it feasible for real world application.

According to a further aspect of the invention, the dependence-factor of the dependency between the first road segment and the second road segment is calculated using a copula function and a rank-based correlation between the first road segment and the second road segment. This combination advantageously allows for a fast and accurate calculation of the path travel time distribution of the vehicle path.

According to a further aspect of the invention, the copula function is estimated by estimating segment travel time distributions from the received travel time data of the plurality of other vehicles for the plurality of road segments along the selected path of the vehicle. By using historical travel time data of other vehicles of a vehicle fleet sufficient data can advantageously be provided for the copula function to estimate segment travel time distributions.

In accordance with a further aspect of the invention, copula parameters of the copula function are estimated using a finite Gaussian Mixture Model. Said copula parameters are thus advantageously estimated using non-parametric estimators.

According to a further aspect of the invention, the rank-based correlation between the first road segment and the second road segment is calculated using rank-based correlation coefficient Kendall's tau. Said calculation is thus performed advantageously using scale-invariant measures of association which are more flexible in characterizing the dependence of different road segments.

According to a further aspect of the invention, the dependence factor is given by

$$c_{j\Delta p, (i-j)\Delta p} = c\left( \sum_{m=0}^{j} P_\alpha(m), \sum_{n=0}^{i-j} P_\beta(n) \right)$$

wherein c is the copula density, $P_\alpha$ is an approximation of the probability density function of the first road segment and $P_\beta$ is an approximation of the probability density function of the second road segment.

According to a further aspect of the invention, a probability density function of the path travel time distribution of the vehicle is calculated from a joint probability density function with a cumulative distribution function and the probability density function of the first road segment and second road segment along the selected path of the vehicle. In doing so, the dependency and correlation of different segment travel time distributions can be effectively modeled. Furthermore, a conditional mean and variants of a particular segment travel time given the observation of the other can be estimated.

The here described features of the computer implemented method for calculating a travel time distribution of the vehicle path for the driver assistance function of the vehicle are also disclosed for the system for calculating the travel time distribution of the vehicle path for the driver assistance function of the vehicle and vice versa.

Brief description of the figures

For a more complete understanding of the present invention and advantages thereof, reference is now made to the following description taken in conjunction with the accompanying drawings. The invention is explained in more detail below using exemplary embodiments, which are specified in the schematic figures of the drawings, in which:

Fig. 1     shows a flowchart of a computer implemented method for calculating a travel time distribution of a vehicle path for a driver assistance function of the vehicle according to an embodiment of the invention;

Fig. 2     shows a system for calculating the travel time distribution of the vehicle path for a driver assistance function of the vehicle according to the embodiment of the invention;

Fig. 3     shows a graph of a discretization of the two-dimensional plane for dependent discrete convolution;

Fig. 4     shows a schematic illustration of a freeway arterial on which the vehicle is traveling according to the embodiment of the invention;

Fig. 5     shows a freeway segment travel time distribution and Gaussian Mixture Model for segment $\alpha$ according to the embodiment of the invention;

Fig. 6     shows a freeway segment travel time distribution and Gaussian Mixture Model for segment $\beta$ according to the embodiment of the invention;

Fig. 7     shows a freeway segment travel time distribution and Gaussian Mixture Model for segment $\gamma$ according to the embodiment of the invention;

Fig. 8     shows a scatter diagram for freeway segment travel time distributions of segment $\alpha$ and segment $\beta$ according to the embodiment of the invention;

Fig. 9      shows a scatter diagram for freeway segment travel time distributions of segment β and segment γ according to the embodiment of the invention;

Fig. 10     shows various probability density functions for the freeway arterial according to the embodiment of the invention;

Fig. 11     shows a cumulative density function for the freeway travel path according to the embodiment of the invention; and

Fig. 12     shows a schematic illustration of an urban arterial comprising a travel path of a vehicle in accordance with the embodiment of the invention.

Unless indicated otherwise, like reference numbers or signs to the figures indicate like elements.

Detailed description of the embodiments

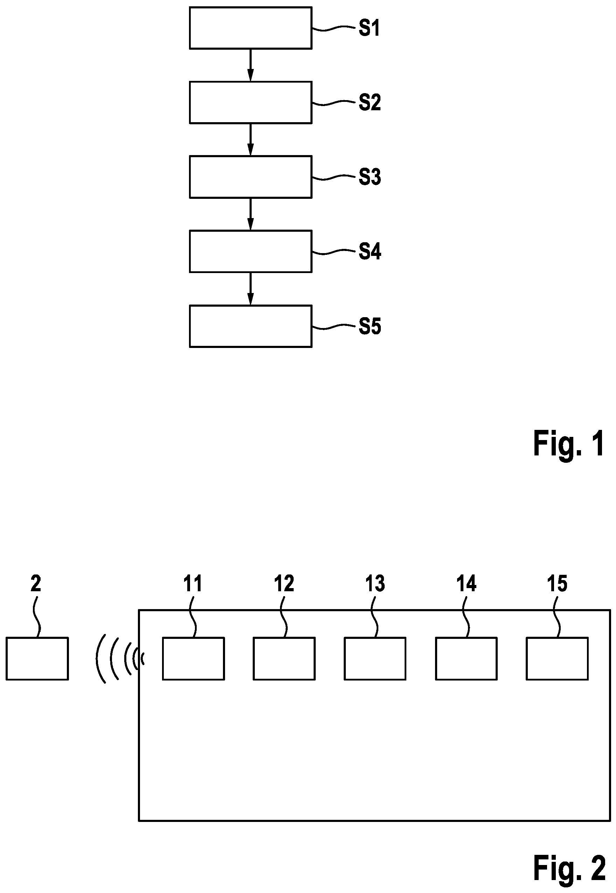

Fig. 1 shows a flowchart of a computer implemented method for calculating a travel time distribution of a vehicle path for a driver assistance function of the vehicle according to an embodiment of the invention.
The method comprises the step of receiving S1, in particular by a server 2 via a wireless connection, travel time data of a plurality of other vehicles for a plurality of road segments along the selected path of the vehicle 3.
The method further comprises the steps of selecting S2 travel time data of at least a neighboring first road segment α and second road segment β along the selected path of the vehicle 3 and discretizing S3 travel time distributions TTD for the neighboring at least first road segment α and second road segment β along the selected path of the vehicle 3.
In addition, the method comprises the steps of calculating S4 a dependence-factor of a dependency between the first road segment α and the second road segment β, wherein the dependence-factor incorporates a copula-based correlation between the first road segment α and the second road segment β, and performing S5 a discrete convolution dependent upon the dependence-factor to calculate the travel time distribution TTD of the vehicle path 1.
The dependence-factor of the dependency between the first road segment α and second road segment β is calculated using a copula function and a rank-based correlation between the first road segment α and the second road segment β.
The copula function is estimated by estimating segment travel time distributions TTD from the received travel time data of the plurality of other vehicles for the plurality of road segments along the selected path of the vehicle 3. Copula parameters of the copula function are estimated using a finite Gaussian Mixture Model.
The rank-based correlation between the first road segment α and the second road segment β is calculated using rank-based correlation coefficient Kendall's tau. A probability density function of the path travel time distribution TTD of the vehicle 3 is calculated from a joint probability density function with a cumulative distribution function and the probability density function of the first road segment α and second road segment β along the selected path of the vehicle 3.
Fig. 2 shows a system for calculating the travel time distribution of the vehicle path for a driver assistance function of the vehicle according to the embodiment of the invention.
The system comprises means 11 for receiving, in particular by a server 2 via a wireless connection, travel time data of a plurality of other vehicles for a plurality of road segments along the selected path of the vehicle 3.
The system further comprises means 12 for selecting travel time data of at least a neighboring first road segment α and second road segment β along the selected path of the vehicle 3 and means 13 for discretizing travel time distributions TTD for the neighboring at least first road segment α and second road segment β along the selected path of the vehicle 3.
The system moreover comprises means 14 for calculating a dependence-factor of a dependency between the first road segment α and second road segment β, wherein the dependence-factor incorporates a copula-based correlation between the first road segment α and the second road segment β, and means 15 for performing a discrete convolution dependent upon the dependence-factor to calculate the travel time distribution TTD of the vehicle path 1.

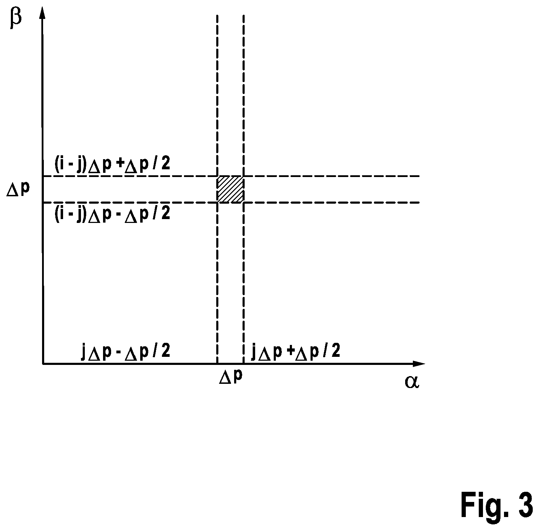

Fig. 3 shows a graph of a discretization of the two-dimensional plane for dependent discrete convolution.
A road network can be represented as a directed graph G = (V,E) which is an ordered pair of a (finite) set of vertices V and a set of edges E, representing geolocations and road segments connecting these locations, respectively. An edge $e \in E$ comprises a pair of two vertices $v_1, v_2 \in V$. Besides we have $o, d \in V$, representing the origin and the destination, respectively. The travel time for each segment is represented as a random variable x, which is derived from historical data. Thus, empirical segment TTD is discrete.
For characterizing segment TTD as continuous probability density function $f(x)$ with distribution function F(x), both parametric and nonparametric estimators can be used. Examples for parametric estimators are Normal, Lognormal, Gamma, and Weibull, while Kernel Density Estimation and Gaussian Mixture Model are examples for nonparametric estimators.

A path from o to d is comprised of several successive segments. As historical data for entire paths are not available, path TTD is obtained by aggregating segment TTD, which is explained below.

Copulas are functions that relate multivariate distribution functions of random variables to their one-dimensional marginal distribution functions. According to Sklar's theorem, for an n-variate distribution function $F(x_1,...,x_n)$ with marginal distribution functions $F_1(x_1),...,F_n(x_n)$, there exists a certain copula function C which meets the relationship

$$F(x_1,...,x_n) = C(F_1(x_1),...,F_n(x_n)).$$

If marginal distributions are all continuous, C is unique. Based on Sklar's theorem the concept of copula provides an efficient way of modeling dependent variables. The joint distribution $f(x_1,...,x_n)$ of probability density functions $f_1(x_1),...,f_n(x_n)$ can be obtained by

$$f(x_1, ..., x_n) = c(F_1(x_1), ..., F_n(x_n)) \prod_{i=1}^{n} f_i(x_i)$$

with copula density

$$c(F_1(x_1), ..., F_n(x_n)) = \frac{\partial C(F_1(x_1), ..., F_n(x_n))}{\partial F_1(x_1), ..., \partial F_n(x_n)}.$$

There are different measures of dependence. The most commonly used one for two random variables $X, Y$, is Pearson's linear correlation coefficient, defined by

$$\rho_P(X,Y) = \frac{cov(X,Y)}{\sqrt{\sigma^2(X)\sigma^2(Y)}}$$

where $cov\,(X,Y)$ is the covariance of $X$ and $Y$, and $\sigma$ denotes the standard deviation of $X$ and $Y$, respectively.

Pearson's linear correlation coefficient has the deficiency that it is not invariant under nonlinear strictly increasing transformations. Scale-invariant measures of association are more flexible in characterizing the dependence, such as rank-based correlation coefficient Kendall's tau. For two independent and identically distributed random vectors $(X_1,Y_1)$ and $(X_2,Y_2)$ Kendall's tau is defined as the probability of concordance minus the probability of discordance,

$$\tau = \tau_{X,Y} = P[(X_1 - X_2)(Y_1 - Y_2) > 0] - P[(X_1 - X_2)(Y_1 - Y_2) < 0].$$

Kendall's tau produces values ranging from -1 to 1, with a positive correlation indicating that the ranks of both variables increase at the same time while a negative correlation indicates that as the rank of one variable increases, that of the other one decreases.

Archimedean copulas are very popular because they are easily derived and they are capable of capturing wide ranges of dependence. The definition of the Archimedean copula is based on the generator function $\phi$. Archimedean copulas take the form

$$C(u_1,u_2,...,u_n) = \phi^{(-1)}(\phi(u_1) + \phi(u_2) + ... + \phi(u_n)),$$

where $u_i := F_i(x_i)$ for $i \in \{1,...,n\}$. The generator function $\phi$ is a continuous and strictly decreasing function which meets $\phi(0) = \infty$, $\phi(\infty) = 0$. The pseudo-inverse of $\phi$ is the function $\phi^{(-1)}$, which also is a continuous and strictly decreasing function meeting $\phi^{(-1)}(0) = \infty$, $\phi^{(-1)}(\infty) = 0$ and is defined as

$$\varphi^{(-1)}(t) = \begin{cases} \varphi^{-1}(t), & 0 \leq t \leq \varphi(0) \\ 0, & \varphi(0) \leq t \leq \infty \end{cases}.$$

If the generator function is definite, its corresponding copula function is also explicit. Hence, different generator functions result in different types of copulas. One frequently used archimedian copula is the Clayton copula, which has the generation function

$$\phi\text{Clayton}(t) = (1 + t) - 1/\vartheta,$$

where $\vartheta$ is the copula parameter, describing the correlation. Kendall's tau is related to $\vartheta$ by

$$\theta = \frac{2\tau}{1 - \tau}.$$

The bivariate Clayton copula density for two marginals $u_1$ and $u_2$ is

$$c = \frac{u_1^{-1-\theta}}{(-1 + u_1^{-\theta} + u_2^{-\theta})^{\frac{1+\theta}{\theta}}}.$$

A copula model for estimating path TTD is estimated in two steps. First segment TTDs are estimated from empirical GPS data. Next, the copula parameters are estimated. Segment TTDs need to be characterized using continuous marginal distributions.

A finite Gaussian Mixture Model (GMM) with three components can be used as it showed an accurate fit. The finite GMM with k components is represented as

$$p(y|\mu_1, ..., \mu_k; s_1, ..., s_k; \pi_1, ..., \pi_k) = \sum_{j=1}^{k} \pi_j \mathcal{N}(\mu_j, s_j^{-1})$$

where $\mu_j$ are the means, $s_j$ are the inverse variances, $\pi_j$ are the mixture weights satisfying $\sum_{j=1}^{k} \pi_j = 1$, and N is a normalized Gaussian with specified mean and variance.

The parameters of the GMM are obtained by the Expectation-Maximization algorithm. For the second stage of the estimation process, the copula parameters are estimated using:

$$\theta = \frac{2\tau}{1 - \tau}.$$

As there is no analytical method for obtaining the distribution of the sum of travel times using the copula model, samples need be generated from the copula model to estimate path TTD.

As path TTD estimation using convolution has a strong precondition that the segment TTDs being convolved must be independent, we propose a formulation of convolution for dependent segment TTDs. DDC is illustrated for calculating path TTD comprised of two segment TTDs, where travel time for segment 1 is denoted as a random variable $\alpha$, and travel time for segment 2 is denoted as $\beta$. The PDF for path TTD denoted as $f_{\alpha+\beta}$ can be calculated from the joint PDF $f_{\alpha,\beta}$ with CDFs $F_\alpha$ and $F_\beta$, and PDFs $f_\alpha$ and $f_\beta$, respectively:

$$f_{\alpha+\beta}(a) = \int_{\underline{\alpha}}^{\overline{\alpha}} f_{\alpha,\beta}(x, a - x)dx, \; a \in [\underline{\alpha} + \underline{\beta}, \overline{\alpha} + \overline{\beta}]$$

where $[\underline{\alpha},\overline{\alpha}]$ is the domain of $\alpha$ and $[\overline{\beta},\underline{\beta}]$ is the domain of 6. If $\alpha$ and $\beta$ are independent, $f_{\alpha,\beta}(x,y)$ can be obtained by the product of its marginal PDFs:

$$f_{\alpha,\beta}(x,y) = f_\alpha(x)f_\beta(y),$$

and it becomes

$$f_{\alpha+\beta}(a) = \int_{\underline{\alpha}}^{\overline{\alpha}} f_\alpha(x)f_\beta(a - x)dx, \; a \in [\underline{\alpha} + \underline{\beta}, \overline{\alpha} + \overline{\beta}],$$

which is the convolution equation. For computerized calculation, the discrete form of convolution is used:

$$P_{\alpha+\beta}(i) = \sum_{j=i_{\underline{\alpha}}}^{i_{\overline{\alpha}}} P_\alpha(j)P_\beta(i-j), \ i \in [i_{\underline{\alpha}} + i_{\underline{\beta}}, i_{\overline{\alpha}} + i_{\overline{\beta}}]$$

,

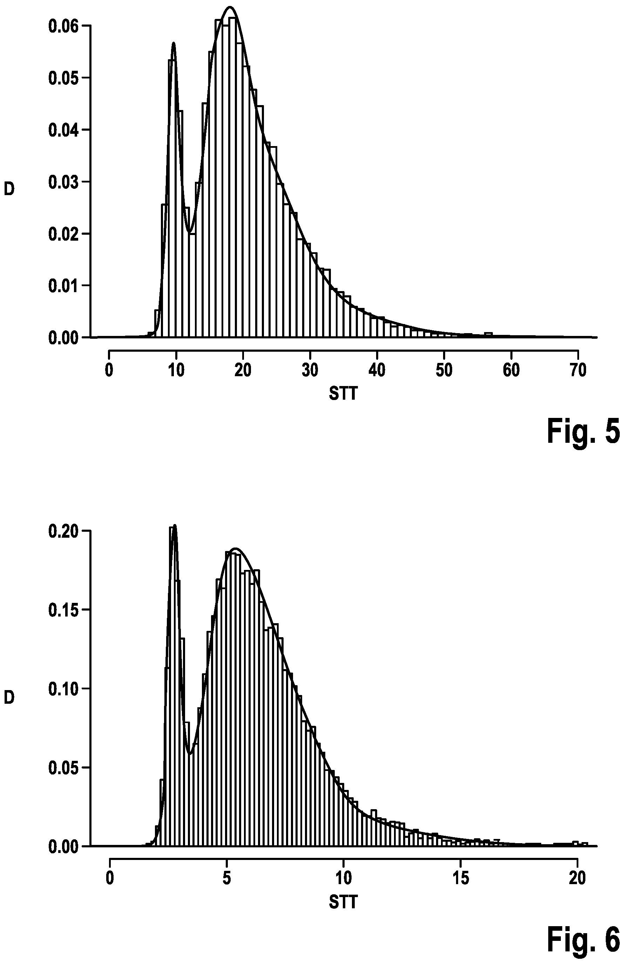

where $P_\alpha(i)$, $P_\beta(i)$ and $P_{\alpha+\beta}(i)$ are the discrete approximations of $f_\alpha(\cdot)$, $f_\beta(\cdot)$ and $f_{\alpha+\beta}(\alpha)$. For that purpose, an N-dimensional space is discretized with a step of $\Delta p$, as shown in Figures 5 to 7. For each dimension $\Delta p$ may differ, however, for simplicity reasons the same $\Delta p$ was chosen for every dimension. Then the discrete approximation of $f_\alpha(\cdot)$ is defined as follows:

$$P_\alpha(i) = \int_{i\Delta p - \Delta p/2}^{i\Delta p + \Delta p/2} f_\alpha(x)dx.$$

The discrete approximation $P_\beta(i)$ of $f_\beta(\cdot)$ is defined analogously.
Now we consider the case, where $\alpha$ and $\beta$ are dependent.
Then

$$f_{\alpha,\beta}(x,y) = f_\alpha(x)f_\beta(y),$$

does not hold. However, based on Sklar's theorem we can use

$$f(x_1, ..., x_n) = c(F_1(x_1), ..., F_n(x_n)) \prod_{i=1}^{n} f_i(x_i)$$

and obtain

$$f_{\alpha,\beta}(x,y) = c(F_\alpha(x), F_\beta(y))f_\alpha(x)f_\beta(y).$$

Using

$$f_{\alpha,\beta}(x,y) = c(F_\alpha(x), F_\beta(y))f_\alpha(x)f_\beta(y)$$

and

$$f_{\alpha+\beta}(a) = \int_{\underline{\alpha}}^{\overline{\alpha}} f_{\alpha,\beta}(x, a-x)dx, \ a \in [\underline{\alpha} + \underline{\beta}, \overline{\alpha} + \overline{\beta}]$$

the dependent convolution becomes

$$f_{\alpha+\beta}(a) = \int_{\underline{\alpha}}^{\overline{\alpha}} c(F_\alpha(x), F_\beta(a-x))f_\alpha(x)f_\beta(a-x)dx.$$

Then the DDC can be formulated as

$$P_{\alpha+\beta}(i) = \sum_{j=i_{\underline{\alpha}}}^{i_{\overline{\alpha}}} \int_{j\Delta p - \Delta p/2}^{j\Delta p + \Delta p/2} \int_{(i-j)\Delta p - \Delta p/2}^{(i-j)\Delta p + \Delta p/2} f_{\alpha,\beta} \, dx \, dy$$

$$= \sum_{j=i_{\underline{\alpha}}}^{i_{\overline{\alpha}}} \int_{j\Delta p - \Delta p/2}^{j\Delta p + \Delta p/2} \int_{(i-j)\Delta p - \Delta p/2}^{(i-j)\Delta p + \Delta p/2} c(F_\alpha(x), F_\beta(y))f_\alpha(x)f_\beta(y) \, dx \, dy.$$

If $\Delta p$ is small enough, $c(F_\alpha(x), F_\beta(y))$ can be approximated as a constant over the 2-dimensional interval of $[j\Delta p - \Delta p/2, j\Delta p + \Delta p/2] \times [(i-j)\Delta p - \Delta p/2, (i-j)\Delta p + \Delta p/2]$ and is denoted as $c_{j\Delta p,(i-j)\Delta p}$.
It can be calculated by

$$c_{j\Delta p,(i-j)\Delta p} = c\left(\sum_{m=0}^{j} P_\alpha(m), \sum_{n=0}^{i-j} P_\beta(n)\right).$$

Then

$$P_{\alpha+\beta}(i) = \sum_{j=i_{\underline{\alpha}}}^{i_{\overline{\alpha}}} \int_{j\Delta p-\Delta p/2}^{j\Delta p+\Delta p/2} \int_{(i-j)\Delta p-\Delta p/2}^{(i-j)\Delta p+\Delta p/2} f_{\alpha,\beta}\, dx\, dy$$

$$= \sum_{j=i_{\underline{\alpha}}}^{i_{\overline{\alpha}}} \int_{j\Delta p-\Delta p/2}^{j\Delta p+\Delta p/2} \int_{(i-j)\Delta p-\Delta p/2}^{(i-j)\Delta p+\Delta p/2} c(F_\alpha(x), F_\beta(y)) f_\alpha(x) f_\beta(y)\, dx\, dy.$$

becomes

$$P_{\alpha+\beta}(i) = \sum_{j=i_{\underline{\alpha}}}^{i_{\overline{\alpha}}} c_{j\Delta p,(i-j)\Delta p} \int_{j\Delta p-\Delta p/2}^{j\Delta p+\Delta p/2} f_\alpha(x) dx \int_{(i-j)\Delta p-\Delta p/2}^{(i-j)\Delta p+\Delta p/2} f_\beta(y) dy$$

$$= \sum_{j=i_{\underline{\alpha}}}^{i_{\overline{\alpha}}} c_{j\Delta p,(i-j)\Delta p} P_\alpha(j) P_\beta(i-j)$$

Compared to the traditional convolution the DDC has similar form as

$$P_{\alpha+\beta}(i) = \sum_{j=i_{\underline{\alpha}}}^{i_{\overline{\alpha}}} P_\alpha(j) P_\beta(i-j), \ i \in [i_{\underline{\alpha}} + i_{\underline{\beta}}, i_{\overline{\alpha}} + i_{\overline{\beta}}],$$

except that there is a an extra multiplier $c_{j\Delta p,(i\text{-}j)\Delta p}$ determined by the dependency between $\alpha$ and $\beta$.
When $\alpha$ and $\beta$ are independent, $c_{j\Delta p,(i\text{-}j)\Delta p} := 1$ and equation

$$P_{\alpha+\beta}(i) = \sum_{j=i_{\underline{\alpha}}}^{i_{\overline{\alpha}}} c_{j\Delta p,(i-j)\Delta p} \int_{j\Delta p-\Delta p/2}^{j\Delta p+\Delta p/2} f_\alpha(x) dx \int_{(i-j)\Delta p-\Delta p/2}^{(i-j)\Delta p+\Delta p/2} f_\beta(y) dy$$

$$= \sum_{j=i_{\underline{\alpha}}}^{i_{\overline{\alpha}}} c_{j\Delta p,(i-j)\Delta p} P_\alpha(j) P_\beta(i-j)$$

degenerates into the traditional convolution in equation

$$P_{\alpha+\beta}(i) = \sum_{j=i_{\underline{\alpha}}}^{i_{\overline{\alpha}}} P_\alpha(j) P_\beta(i-j), \ i \in [i_{\underline{\alpha}} + i_{\underline{\beta}}, i_{\overline{\alpha}} + i_{\overline{\beta}}],$$

In case of dependent segments, this factor incorporates the copula based correlation between the segments. Compared to the copula framework this approach allows for a simplified and fast computation of the TTD.

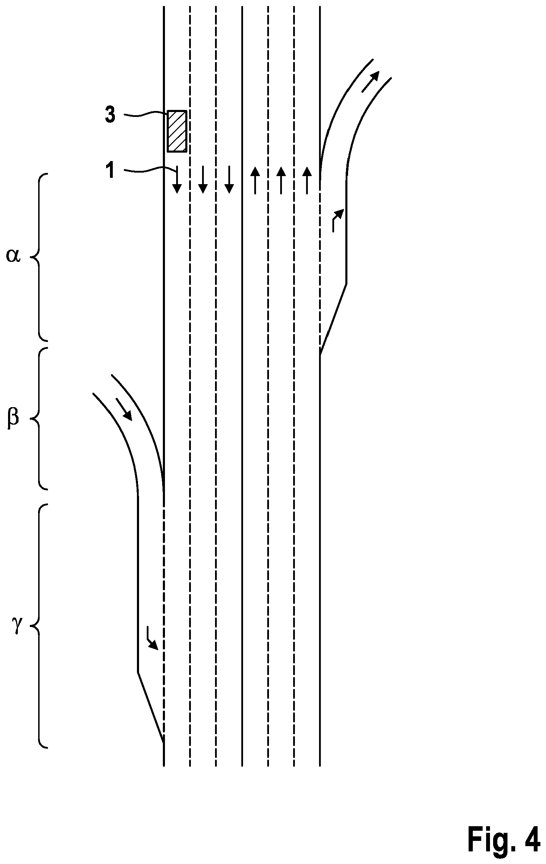

Fig. 4 shows a schematic illustration of a freeway arterial on which the vehicle is traveling according to the embodiment of the invention.
Said freeway arterial comprises three lanes in each direction, an on-ramp and an off-ramp as well as road segments $\alpha$, $\beta$ and $\gamma$. The vehicle 3 is shown to travel along the vehicle path 1 leading through segments $\alpha$, $\beta$ and $\gamma$.
The travel time data is collected from probe vehicles. The setup includes a fleet of probe vehicles, which has a module that reports GPS data and a central server, which collects all data in a database. Each vehicle samples the current GPS positions in intervals of 10s to 30s, which are stored in in the local memory of the vehicle together with the according timestamp. After sampling a few positions, a filter mechanism decides whether sampled GPS positions are transmitted to the central server.
This filter continuously compares the velocity of the vehicle with the velocity given by a traffic provider. If the velocity at one of the sampled data points deviates more than 10% to 30% (depending on the software version on the module) from the provided velocity, the recently samples positions and according timestamps are transmitted to the central server.

Each transmitted position is linked to an alias, which is randomly generated by the vehicle and changes over time due to protection of driver's privacy. At the server, single transmitted positions of the same alias can be connected in order to reconstruct vehicle trajectories.

The collected raw data is then matched to the segments of the road network. Velocities are derived from the difference of time and location, respectively, between two GPS points. Travel times are then obtained using the velocity and the length of the segment.

Fig. 5, 6 and 7 show a freeway segment travel time STT distribution and Gaussian Mixture Model for segment $\alpha$, $\beta$ and $\gamma$ respectively according to the embodiment of the invention.

In order to understand the correlation between segments we investigate the individual segment TTDs. For the DDC no estimation of marginal distribution is necessary, as it can directly work with discrete histogram data. For the copula model marginal distribution needs to be estimated. Freeway travel time are comprised of four states. The first state is the free flow state, where median travel times are low and the spreads of the distribution is small. The distribution is approximately symmetric.

The second state is the congestion onset, where median travel times are still low. The third phase is congested traffic, where median travel times are high, while the distribution is wide. In these periods congestion can be expected in different degrees of severity, resulting in a wide range of possible travel times.

The fourth phase is the congestion dissolve, where median travel times are low, but the distribution is skewed to the left, resembling that in most cases congestion has dissolved but in a decreasing number of cases still congestion occurred. Figures 5, 6, and 7 show segment TTD for Segment 1, Segment 2, and Segment 3 of the freeway arterial, respectively.

For estimation of marginal distribution, a GMM with five components was found as best fitting. The parameters of the GMM can be found in table 1. The five components can be interpreted as follows The first GMM component resembles the free flow phase. The second component reflects the phase of congestion onset, as well as the congestion dissolve. The third and fourth components reflect the congested traffic with different levels of congestion, respectively. The fifth component denotes the range of extremely heavy congestion with a large standard deviation resembling the tail of the distribution which happens rarely, thus, the very small mixture weight.

Table 1: GMM Parameters with five components for highway segment TTD estimation

| Segment | Mean ($\mu$) | Sigma ($\sigma$) | Weight ($\pi$) |
|---|---|---|---|
| Segment 1 | (9.70, 17.06, 23.06, 32.16, 61.59) | (0.96, 3.24, 5.28, 8.46, 26.12) | (0.12, 0.37, 0.36, 0.11, 0.01) |
| Segment 2 | (2.79, 5.03, 7.00, 10.16, 20.15) | (0.27, 1.01, 1.60, 2.84, 9.26) | (0.12, 0.32, 0.41, 0.11, 0.01) |
| Segment 3 | (4.72, 9.22, 12.32, 17.70, 31.49) | (0.47, 1.97, 2.80, 4.80, 13.35) | (0.13, 0.35, 0.40, 0.08, 0.01) |

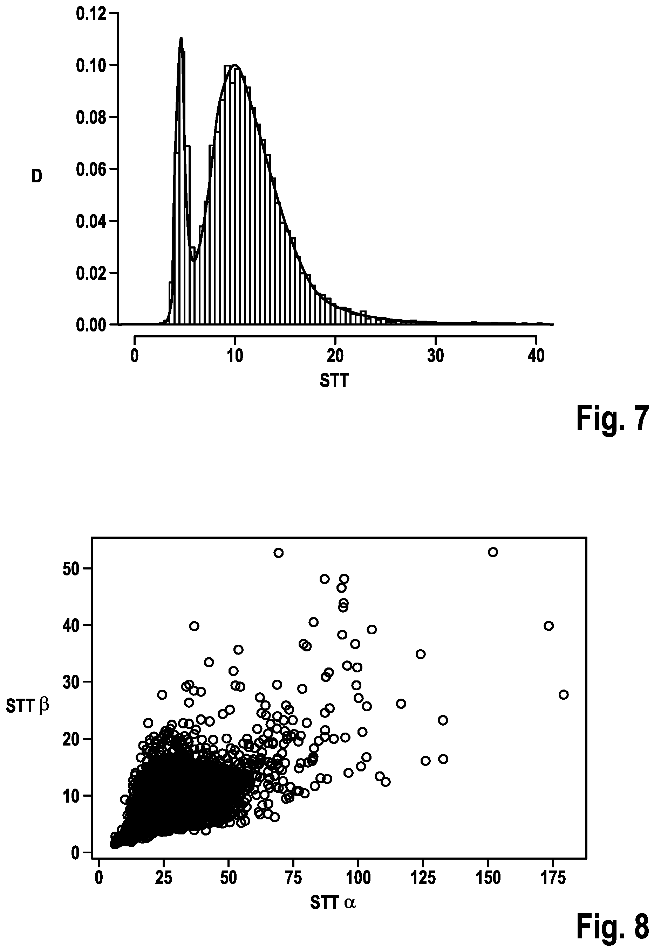

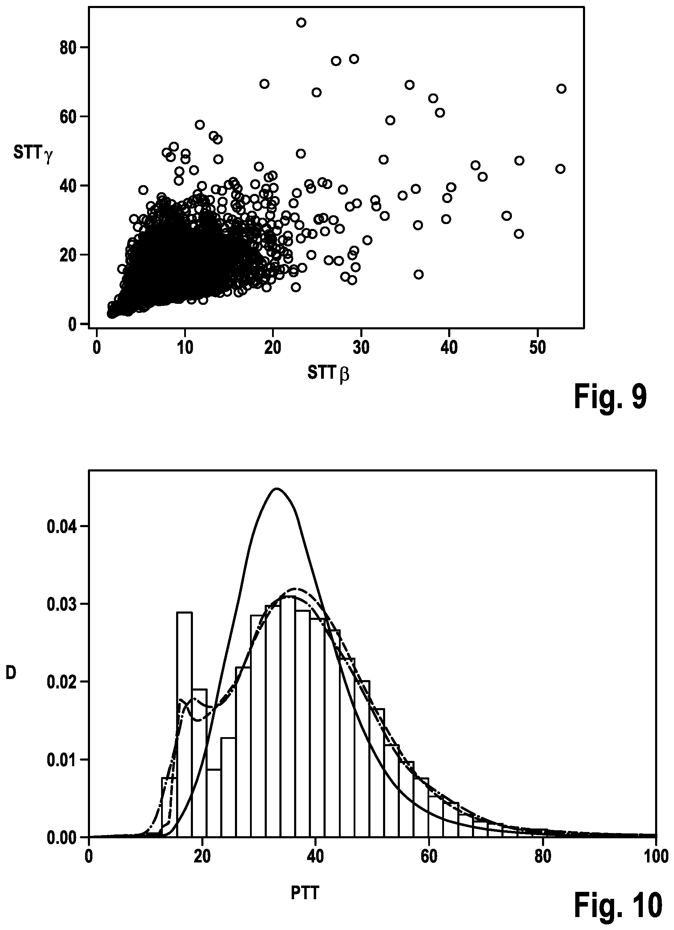

Fig. 8 shows a scatter diagram for freeway segment travel time distributions of segment $\alpha$ and segment $\beta$ according to the embodiment of the invention and Fig. 9 shows a scatter diagram for freeway segment travel time distributions of segment $\beta$ and segment $\gamma$ according to the embodiment of the invention. This shows segment correlation.

In addition, Kendall's tau

$$\tau = \tau_{X,Y} = P[(X_1 - X_2)(Y_1 - Y_2) > 0] - P[(X_1 - X_2)(Y_1 - Y_2) < 0].$$

as a correlation measure is given for each segment pair, with a values of 0.694 and 0.760 for the first and second segment pair, respectively. We can observe lower tail dependence for each scatter diagram. Thus, segment correlation exists and needs to be taken into account when aggregating successive segment TTDs.

A three-dimensional Clayton Copula with copula parameter 5.324 showed the best fit. Therefore, it was used for path TTD estimation and comparison with the DDC.

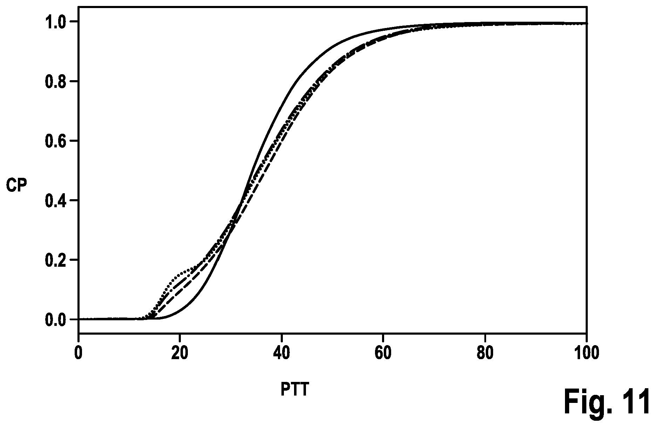

Fig. 10 shows various probability density functions for the freeway arterial according to the embodiment of the invention and Fig. 11 shows a cumulative density function for the freeway travel path according to the embodiment of the invention.

For estimating path TTD we compare the performance of the proposed DDC methodology with the copula model, convolution, and the empirical distribution. The number of samples generated from the Copula Model was set to the same number as original data samples. For the DDC a discretization step of one second was found suitable, and, thus, is chosen.

Figures 10 and 11 show PDF and CDF for the travel time of a path comprised of the three freeway segments estimated by the various models and the empirical data, respectively. Kolmogorov-Smirnov and Cramer-von-Mises statistics can be found in table 2. A lower value for the KS and CVM statistic, respectively, indicates a better fit.

As one could expect, the shape of path TTD is analogous to the ones of segment TTDs with the same states, which were defined above. The convolution treats the successive segments as independent. Path TTD obtained by the convolution does not resemble any states. Instead we obtain a unimodal distribution. The DDC and the Copula Model account for segment correlation. Path TTD obtained by DDC and Copula Model show an accurate resemblance of the TTD states. While there is only a small underestimation for the free flow peak, and a small overestimation for the state denoting both congestion onset and congestion dissolve, path TTD obtained the two models accounting for segment correlation fit the empirical distribution accurately. The Copula Model performs slightly better than the DDC.

In order to test the eligibility for real world applications, we estimate path TTD for an increasing number of segments and compare computational times in the next section. Compared to the uninterrupted travel flow on freeway facilities, the interrupted nature of travel flows on urban arterials make TTD estimation much more challenging. For that reason we use a data set of an urban arterial with several road features resulting in an interrupted travel flow, in order to investigate the potential for real world application of the proposed DDC methodology and the Copula Model.

Table 2: gof highway all

|  | Convolution | Copula Model | DDC |
| --- | --- | --- | --- |
| KS | 0.1197 | 0.0313 | 0.0596 |
| CVM | 0.2447 | 0.0051 | 0.0382 |

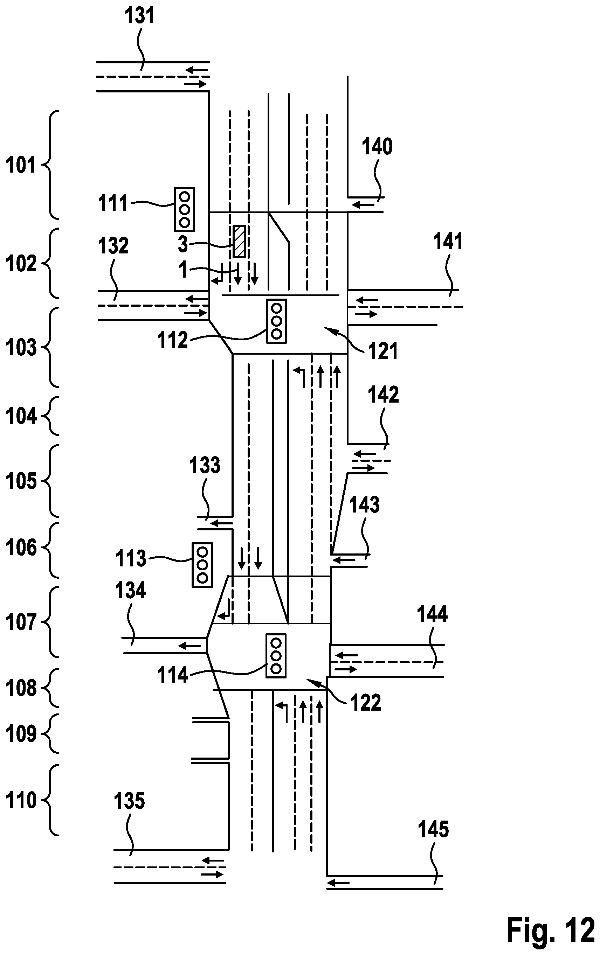

Fig. 12 shows a schematic illustration of an urban arterial comprising a travel path of a vehicle in accordance with the embodiment of the invention.

The urban arterial comprises a plurality of roads including a main road comprising road segments 101, 102, 103, 104, 105, 106, 107, 108, 109, 110. In addition, a plurality of streets 131, 132, 133, 134, 135, 140, 141, 142, 143, 144, 145 meet the main road at right angles at either intersections 121, 122 or between respective intersections. In addition, said urban arterial comprises a number of traffic lights 111, 112, 113, 114. The vehicle 3 is shown traveling along travel path 1 on the main road of the urban arterial.

The calculation of the travel time distribution TTD for the urban arterial is analogous to the afore-mentioned calculation of the travel time distribution of the freeway arterial. The individual segments 101 to 110 are analogous to the segments $\alpha$, $\beta$ and $\gamma$ of the freeway arterial. Thus, the method for calculating a travel time distribution TTD of a vehicle path 1 for the driver assistance function of the vehicle in the context of the urban arterial can thus be performed in the same way as described in the context of the freeway arterial.

The parameters of the GGM are listed in table 3. The first component of GMM denotes the situation when vehicle travel with free flow speed. The second component implies partially delayed vehicles, while the third component denotes the congested situation. For the longest segment, Segment 101, with a length of 105m, three peaks can be observed. For the segments with a shorter length, the observable distinction is not that clear, however GMM still shows an accurate fit.

In addition, Kendall's tau for each segment pair is given ranging from values between 0.318 and 0.835, showing that segment correlation exists. However, as there are several factors affecting the travel time of each segment and the correlation in between segments, such as signal control, parking lane, turning lane, congestion, and weather, the correlation structure is complex and differs for each segment pair. The values of individual travel times for each segment scatter in a wide range of the joint distribution space.

Only segments 104, 106 and 108, which are relatively short and do not have signal control nor turning lanes show a strong lower tail dependence. This is also resembled by a high value for Kendall's tau, with 0.639, 0.835, and 0.748, respectively. The line through the origin is caused by the estimation of the velocities of probe vehicle described above. If one GPS point is located before Segment i and the next GPS point is located behind Segment *j*, the velocity for both segments is equal. Therefore, travel time of Segment *i* and Segment *j* are proportional, causing the line through origin, where the corresponding samples lie.

Table 3: GMM Parameters for segment TTD estimation

| Segment | Mean ($\mu$) | Sigma ($\sigma$) | Weight ($\pi$) |
| --- | --- | --- | --- |
| Segment 101 | (16.08, 31.41, 62.92) | (5.25, 9.79, 12.65) | (0.31, 0.34, 0.34) |
| Segment 102 | (5.41, 8.86, 16.31) | (1.44, 2.68, 5.58) | (0.52, 0.38, 0.09) |
| Segment 103 | (8.92, 14.55, 29.37) | (2.03, 4.06, 9.55) | (0.43, 0.34, 0.22) |
| Segment 104 | (3.11, 5.72, 10.33) | (0.72, 1.69, 3.26) | (0.43, 0.38, 0.17) |
| Segment 105 | (9.46, 17.58, 36.01) | (2.18, 5.26, 10.38) | (0.33, 0.38, 0.28) |

(continued)

| Segment | Mean ($\mu$) | Sigma ($\sigma$) | Weight ($\pi$) |
|---|---|---|---|
| Segment 106 | ( 6.43, 12.26, 29.55) | (1.53, 3.94, 5.36) | (0.46, 0.35, 0.17) |
| Segment 107 | (8.24, 13.30, 27.82) | (1.68, 3.75, 10.94) | (0.54, 0.37, 0.07) |
| Segment 108 | (2.76, 3.97, 7.09) | (0.48, 0.91, 2.69) | (0.48, 0.38, 0.12) |
| Segment 109 | (3.59, 5.42, 10.17) | (0.64, 1.34, 3.94) | (0.52, 0.35, 0.11) |
| Segment 110 | (6.67, 11.29, 22.46) | (1.32, 3.22, 8.64) | (0.52, 0.35, 0.11) |

For estimating path TTD we compare the performance of the proposed DDC methodology with the copula model, convolution, and the empirical distribution. For the copula model, the two-stage estimation procedure described above was used. The number of samples generated from the Copula Model was set to the same number as original data samples. For the DDC a discretization step of one second was used.

A lower value for the KS and CVM statistic, respectively, indicates a better fit.

both DDC and Copula Model perform better than the convolution due to their ability to incorporate segment correlation. DDC and Copula Model model the tails as well as the bulk of the distribution more accurately than the convolution. Goodness of fit tests show that the Copula Model estimates path TTD more accurately than the DDC, while the path TTD estimate of the DDC is more accurate than convolution by far.

However, when comparing computing time, the power of the DDC is unveiled. For application in route guidance systems, a path comprised of 100 segments is realistic. While the DDC takes approximately 3 seconds, which is feasible for applications, the Copula Model takes approximately 20 seconds, which is unfeasible for real world applications.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability or configuration in any way. Rather, the foregoing summary and detailed description will provide those skilled in the art with a convenient roadmap for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed therein.

**Claims**

1. Computer implemented method for calculating a travel time distribution (TTD) of a vehicle path (1) for a driver assistance function of the vehicle (3), comprising the steps of:

   Receiving (S1) by a server (2) via a wireless connection, travel time data of a plurality of other vehicles for a plurality of road segments along the selected path of the vehicle (3), said travel time data comprising a current GPS position of each vehicle and a timestamp, wherein the travel time data is based on a filter continuously comparing a velocity of each vehicle with the velocity given by a traffic provider, wherein if the velocity at one of sampled data points deviates more than 10% to 30% from the provided velocity, recently sampled positions and according timestamps are transmitted to the central server (2);
   selecting (S2) travel time data of at least a neighboring first road segment ($\alpha$) and second road segment ($\beta$) along the selected path of the vehicle (3);
   discretizing (S3) travel time distributions (TTD) for the neighboring at least first road segment ($\alpha$) and second road segment ($\beta$) along the selected path of the vehicle (3);
   calculating (S4) a dependence-factor of a dependency between the first road segment ($\alpha$) and the second road segment ($\beta$), wherein the dependence-factor incorporates a copula-based correlation between the first road segment ($\alpha$) and the second road segment ($\beta$), wherein the dependence-factor of the dependency between the first road segment ($\alpha$) and second road segment ($\beta$) is calculated using a copula function and a rank-based correlation between the first road segment ($\alpha$) and the second road segment ($\beta$); and
   performing (S5) a discrete convolution dependent upon the dependence-factor to calculate the travel time distribution (TTD) of the vehicle path (1), wherein a probability density function of the path travel time distribution (TTD) of the vehicle (3) is calculated from a joint probability density function with a cumulative distribution function and the probability density function of the first road segment ($\alpha$) and second road segment ($\beta$) along the selected path of the vehicle (3).

**2.** Computer implemented method of claim 1, wherein the copula function is estimated by estimating segment travel time distributions (TTD) from the received travel time data of the plurality of other vehicles for the plurality of road segments along the selected path of the vehicle (3).

**3.** Computer implemented method of claim 1 or 2, wherein copula parameters of the copula function are estimated using a finite Gaussian Mixture Model.

**4.** Computer implemented method of one of claims 1 to 3, wherein the rank-based correlation between the first road segment ($\alpha$) and the second road segment ($\beta$) is calculated using rank-based correlation coefficient Kendall's tau.

**5.** Computer implemented method of any one of the preceding claims, wherein the dependence factor is given by

$$c_{j\Delta p,(i-j)\Delta p} = c\left( \sum_{m=0}^{j} P_\alpha(m), \sum_{n=0}^{i-j} P_\beta(n) \right)$$

wherein c is the copula density, $P_\alpha$ is an approximation of the probability density function of the first road segment ($\alpha$) and $P_\beta$ is an approximation of the probability density function of the second road segment ($\beta$).

**6.** System (10) for calculating a travel time distribution (TTD) of a vehicle path (1) for a driver assistance function of the vehicle (3), comprising:

Means (11) for receiving by a server (2) via a wireless connection, travel time data of a plurality of other vehicles for a plurality of road segments along the selected path of the vehicle (3), said travel time data comprising a current GPS position of each vehicle and a timestamp, wherein the travel time data is based on a filter configured to continuously compare a velocity of each vehicle with the velocity given by a traffic provider, wherein if the velocity at one of sampled data points deviates more than 10% to 30% from the provided velocity, recently sampled positions and according timestamps are transmittable to the central server (2);
means (12) for selecting travel time data of at least a neighboring first road segment ($\alpha$) and second road segment ($\beta$) along the selected path of the vehicle (3);
means (13) for discretizing travel time distributions (TTD) for the neighboring at least first road segment ($\alpha$) and second road segment ($\beta$) along the selected path of the vehicle (3);
means (14) for calculating a dependence-factor of a dependency between the first road segment ($\alpha$) and second road segment ($\beta$), wherein the dependence-factor incorporates a copula-based correlation between the first road segment ($\alpha$) and the second road segment ($\beta$), wherein the means (14) is configured to calculate the dependence-factor of the dependency between the first road segment ($\alpha$) and second road segment ($\beta$) using a copula function and a rank-based correlation between the first road segment ($\alpha$) and the second road segment ($\beta$); and
means (15) for performing a discrete convolution dependent upon the dependence-factor to calculate the travel time distribution (TTD) of the vehicle path (1), wherein the means (15) is configured to calculate a probability density function of the path travel time distribution (TTD) of the vehicle (3) from a joint probability density function with a cumulative distribution function and the probability density function of the first road segment ($\alpha$) and second road segment ($\beta$) along the selected path of the vehicle (3).

**7.** Computer program with program code to perform the method of any one of claims 1 to 5 when the computer program is executed on a computer.

**8.** Computer-readable data carrier containing program code of a computer program for performing the method of to any one of claims 1 to 5 when the computer program is executed on a computer.

**Patentansprüche**

**1.** Computerimplementiertes Verfahren zum Berechnen einer Fahrzeitverteilung (TTD) eines Fahrzeugpfades (1) für eine Fahrerassistenzfunktion des Fahrzeugs (3), das die folgenden Schritte umfasst:

Empfangen (S1) von Fahrzeitdaten mehrerer anderer Fahrzeuge für mehrere Straßensegmente entlang des ausgewählten Pfades des Fahrzeugs (3) durch einen Server (2) über eine drahtlose Verbindung, wobei die Fahrzeitdaten eine aktuelle GPS-Position jedes Fahrzeugs und einen Zeitstempel umfassen, wobei die Fahrzeitdaten auf einem Filter basieren, der kontinuierlich eine Geschwindigkeit jedes Fahrzeugs mit der durch einen Verkehrsanbieter vorgegebenen Geschwindigkeit vergleicht, wobei, falls die Geschwindigkeit an einem der abgetasteten Datenpunkte mehr als 10 % bis 30 % von der bereitgestellten Geschwindigkeit abweicht, kürzlich abgetastete Positionen und entsprechende Zeitstempel an den zentralen Server (2) übertragen werden;
Auswählen (S2) von Fahrzeitdaten mindestens eines benachbarten ersten Straßensegments ($\alpha$) und zweiten Straßensegments ($\beta$) entlang des ausgewählten Pfades des Fahrzeugs (3);
Diskretisieren (S3) von Fahrzeitverteilungen (TTD) für das benachbarte mindestens erste Straßensegment ($\alpha$) und zweite Straßensegment ($\beta$) entlang des ausgewählten Pfades des Fahrzeugs (3);
Berechnen (S4) eines Abhängigkeitsfaktors einer Abhängigkeit zwischen dem ersten Straßensegment ($\alpha$) und dem zweiten Straßensegment ($\beta$), wobei der Abhängigkeitsfaktor eine kopulabasierte Korrelation zwischen dem ersten Straßensegment ($\alpha$) und dem zweiten Straßensegment ($\beta$) beinhaltet, wobei der Abhängigkeitsfaktor der Abhängigkeit zwischen dem ersten Straßensegment ($\alpha$) und dem zweiten Straßensegment ($\beta$) unter Verwendung einer Kopulafunktion und einer rangbasierten Korrelation zwischen dem ersten Straßensegment ($\alpha$) und dem zweiten Straßensegment ($\beta$) berechnet wird; und
Durchführen (S5) einer diskreten Faltung in Abhängigkeit von dem Abhängigkeitsfaktor, um die Fahrzeitverteilung (TTD) des Fahrzeugpfades (1) zu berechnen, wobei eine Wahrscheinlichkeitsdichtefunktion der Pfadfahrzeitverteilung (TTD) des Fahrzeugs (3) aus einer gemeinsamen Wahrscheinlichkeitsdichtefunktion mit einer kumulativen Verteilungsfunktion und der Wahrscheinlichkeitsdichtefunktion des ersten Straßensegments ($\alpha$) und zweiten Straßensegments ($\beta$) entlang des ausgewählten Pfades des Fahrzeugs (3) berechnet wird.

2. Computerimplementiertes Verfahren nach Anspruch 1, wobei die Kopulafunktion durch Schätzen von Segmentfahrzeitverteilungen (TTD) aus den empfangenen Fahrzeitdaten der mehreren anderen Fahrzeuge für die mehreren Straßensegmente entlang des ausgewählten Pfades des Fahrzeugs (3) geschätzt wird.

3. Computerimplementiertes Verfahren nach Anspruch 1 oder 2, wobei Kopulaparameter der Kopulafunktion unter Verwendung eines finiten Gaußschen Mischmodells geschätzt werden.

4. Computerimplementiertes Verfahren nach einem der Ansprüche 1 bis 3, wobei die rangbasierte Korrelation zwischen dem ersten Straßensegment ($\alpha$) und dem zweiten Straßensegment ($\beta$) unter Verwendung des rangbasierten Korrelationskoeffizienten Kendalls Tau berechnet wird.

5. Computerimplementiertes Verfahren nach einem der vorhergehenden Ansprüche, wobei der Abhängigkeitsfaktor gegeben ist durch

$$c_{j\Delta p,(i-j)\Delta p} = c\left(\sum_{m=0}^{j} P_\alpha(m), \sum_{n=0}^{i-j} P_\beta(n)\right)$$

wobei c die Kopuladichte ist, $P_\alpha$ eine Approximation der Wahrscheinlichkeitsdichtefunktion des ersten Straßensegments ($\alpha$) ist und $P_\beta$ eine Approximation der Wahrscheinlichkeitsdichtefunktion des zweiten Straßensegments ($\beta$) ist.

6. System (10) zum Berechnen einer Fahrzeitverteilung (TTD) eines Fahrzeugpfades (1) für eine Fahrerassistenzfunktion des Fahrzeugs (3), umfassend:

Mittel (11) zum Empfangen von Fahrzeitdaten mehrerer anderer Fahrzeuge für mehrere Straßensegmente entlang des ausgewählten Pfades des Fahrzeugs (3) durch einen Server (2) über eine drahtlose Verbindung, wobei die Fahrzeitdaten eine aktuelle GPS-Position jedes Fahrzeugs und einen Zeitstempel umfassen, wobei die Fahrzeitdaten auf einem Filter basieren, der dazu ausgelegt ist, kontinuierlich eine Geschwindigkeit jedes Fahrzeugs mit der durch einen Verkehrsanbieter vorgegebenen Geschwindigkeit zu vergleichen, wobei, falls die Geschwindigkeit an einem der abgetasteten Datenpunkte mehr als 10 % bis 30 % von der bereitgestellten Geschwindigkeit abweicht, kürzlich abgetastete Positionen und entsprechende Zeitstempel an den zentralen Server (2) übertragbar sind;
Mittel (12) zum Auswählen von Fahrzeitdaten mindestens eines benachbarten ersten Straßensegments ($\alpha$) und zweiten Straßensegments ($\beta$) entlang des ausgewählten Pfades des Fahrzeugs (3);
Mittel (13) zum Diskretisieren von Fahrzeitverteilungen (TTD) für das benachbarte mindestens erste Straßen-

segment ($\alpha$) und zweite Straßensegment ($\beta$) entlang des ausgewählten Pfades des Fahrzeugs (3); Mittel (14) zum Berechnen eines Abhängigkeitsfaktors einer Abhängigkeit zwischen dem ersten Straßensegment ($\alpha$) und dem zweiten Straßensegment ($\beta$), wobei der Abhängigkeitsfaktor eine kopulabasierte Korrelation zwischen dem ersten Straßensegment ($\alpha$) und dem zweiten Straßensegment ($\beta$) beinhaltet, wobei das Mittel (14) dazu ausgelegt ist, den Abhängigkeitsfaktor der Abhängigkeit zwischen dem ersten Straßensegment ($\alpha$) und dem zweiten Straßensegment ($\beta$) unter Verwendung einer Kopulafunktion und einer rangbasierten Korrelation zwischen dem ersten Straßensegment ($\alpha$) und dem zweiten Straßensegment ($\beta$) zu berechnen; und
Mittel (15) zum Durchführen einer diskreten Faltung in Abhängigkeit von dem Abhängigkeitsfaktor, um die Fahrzeitverteilung (TTD) des Fahrzeugpfades (1) zu berechnen, wobei das Mittel (15) dazu ausgelegt ist, eine Wahrscheinlichkeitsdichtefunktion der Pfadfahrzeitverteilung (TTD) des Fahrzeugs (3) aus einer gemeinsamen Wahrscheinlichkeitsdichtefunktion mit einer kumulativen Verteilungsfunktion und der Wahrscheinlichkeitsdichtefunktion des ersten Straßensegments ($\alpha$) und zweiten Straßensegments ($\beta$) entlang des ausgewählten Pfades des Fahrzeugs (3) zu berechnen.

7. Computerprogramm mit Programmcode, um das Verfahren nach einem der Ansprüche 1 bis 5 durchzuführen, wenn das Computerprogramm auf einem Computer ausgeführt wird.

8. Computerlesbarer Datenträger, der Programmcode eines Computerprogramms zum Durchführen des Verfahrens nach einem der Ansprüche 1 bis 5 enthält, wenn das Computerprogramm auf einem Computer ausgeführt wird.

## Revendications

1. Procédé mis en œuvre par ordinateur pour calculer une distribution de temps de déplacement (TTD) d'un chemin de véhicule (1) pour une fonction d'aide à la conduite du véhicule (3), comprenant les étapes de :

   la réception (S1), par un serveur (2), par l'intermédiaire d'une connexion sans fil, de données de temps de déplacement d'une pluralité d'autres véhicules pour une pluralité de segments de route le long du chemin sélectionné du véhicule (3), lesdites données de temps de déplacement comprenant une position GPS actuelle de chaque véhicule et une estampille temporelle, dans lequel les données de temps de déplacement sont basées sur un filtre comparant en continu une vitesse de chaque véhicule à la vitesse donnée par un fournisseur de circulation, dans lequel, si la vitesse à un de points de données échantillonnés s'écarte de plus que 10 % à 30 % de la vitesse fournie, des positions récemment échantillonnées et estampilles temporelles concordantes sont transmises au serveur central (2) ;
   la sélection (S2) de données de temps de déplacement d'au moins un premier segment de route ($\alpha$) et un second segment de route ($\beta$) voisins le long du chemin sélectionné du véhicule (3) ;
   la discrétisation (S3) de distributions de temps de déplacement (TTD) pour les au moins premier segment de route ($\alpha$) et second segment de route ($\beta$) voisins le long du chemin sélectionné du véhicule (3) ;
   le calcul (S4) d'un facteur de dépendance d'une dépendance entre le premier segment de route ($\alpha$) et le second segment de route ($\beta$), dans lequel le facteur de dépendance incorpore une corrélation à base de copule entre le premier segment de route ($\alpha$) et le second segment de route ($\beta$), dans lequel le facteur de dépendance de la dépendance entre le premier segment de route ($\alpha$) et le second segment de route ($\beta$) est calculé en utilisant une fonction copule et une corrélation à base de rang entre le premier segment de route ($\alpha$) et le second segment de route ($\beta$) ; et
   la réalisation (S5) d'une convolution discrète dépendant du facteur de dépendance pour calculer la distribution de temps de déplacement (TTD) du chemin de véhicule (1), dans lequel une fonction de densité de probabilité de la distribution de temps de déplacement (TTD) de chemin du véhicule (3) est calculée à partir d'une fonction de densité de probabilité conjointe avec une fonction de distribution cumulative et la fonction de densité de probabilité du premier segment de route ($\alpha$) et du second segment de route ($\beta$) le long du chemin sélectionné du véhicule (3).

2. Procédé mis en œuvre par ordinateur de la revendication 1, dans lequel la fonction copule est estimée en estimant des distributions de temps de déplacement (TTD) de segment à partir des données de temps de déplacement reçues de la pluralité d'autres véhicules pour la pluralité de segments de route le long du chemin sélectionné du véhicule (3).

3. Procédé mis en œuvre par ordinateur de la revendication 1 ou 2, dans lequel des paramètres de copule de la fonction copule sont estimés en utilisant un modèle de mélange gaussien fini.

**4.** Procédé mis en œuvre par ordinateur de l'une des revendications 1 à 3, dans lequel la corrélation à base de rang entre le premier segment de route (α) et le second segment de route (β) est calculée en utilisant un coefficient de corrélation à base de rang tau de Kendall.

**5.** Procédé mis en œuvre par ordinateur de l'une quelconque des revendications précédentes, dans lequel le facteur de dépendance est donné par

$$c_{j\Delta p,(i-j)\Delta p} = c\left(\sum_{m=0}^{j} P_\alpha(m), \sum_{n=0}^{i-j} P_\beta(n)\right)$$

c étant la densité copule, $P_\alpha$ étant une approximation de la fonction de densité de probabilité du premier segment de route (α) et $P_\beta$ étant une approximation de la fonction de densité de probabilité du second segment de route (β).

**6.** Système (10) pour calculer une distribution de temps de déplacement (TTD) d'un chemin de véhicule (1) pour une fonction d'aide à la conduite du véhicule (3), comprenant :

des moyens (11) pour recevoir, par le biais d'un serveur (2), par l'intermédiaire d'une connexion sans fil, des données de temps de déplacement d'une pluralité d'autres véhicules pour une pluralité de segments de route le long du chemin sélectionné du véhicule (3), lesdites données de temps de déplacement comprenant une position GPS actuelle de chaque véhicule et une estampille temporelle, dans lequel les données de temps de déplacement sont basées sur un filtre configuré pour comparer en continu une vitesse de chaque véhicule à la vitesse donnée par un fournisseur de circulation, dans lequel, si la vitesse à un de points de données échantillonnés s'écarte de plus que 10 % à 30 % de la vitesse fournie, des positions récemment échantillonnées et des estampilles temporelles concordantes sont transmissibles au serveur central (2) ;
des moyens (12) pour sélectionner des données de temps de déplacement d'au moins un premier segment de route voisin (α) et un second segment de route (β) le long du chemin sélectionné du véhicule (3) ;
des moyens (13) pour discrétiser des distributions de temps de déplacement (TTD) pour les au moins premier segment de route (α) et second segment de route (β) voisins le long du chemin sélectionné du véhicule (3) ;
des moyens (14) pour calculer un facteur de dépendance d'une dépendance entre le premier segment de route (α) et le second segment de route (β), dans lequel le facteur de dépendance incorpore une corrélation à base de copule entre le premier segment de route (α) et le second segment de route (β), dans lequel les moyens (14) sont configurés pour calculer le facteur de dépendance de la dépendance entre le premier segment de route (α) et le second segment de route (β) en utilisant une fonction copule et une corrélation à base de rang entre le premier segment de route (α) et le second segment de route (β) ; et
des moyens (15) pour réaliser une convolution discrète dépendant du facteur de dépendance pour calculer la distribution de temps de déplacement (TTD) du chemin de véhicule (1), dans lequel les moyens (15) sont configurés pour calculer une fonction de densité de probabilité de la distribution de temps de déplacement (TTD) de chemin du véhicule (3) à partir d'une fonction de densité de probabilité conjointe avec une fonction de distribution cumulative et la fonction de densité de probabilité du premier segment de route (α) et du second segment de route (β) le long du chemin sélectionné du véhicule (3).

**7.** Programme d'ordinateur avec code de programme pour réaliser le procédé de l'une quelconque des revendications 1 à 5 lorsque le programme d'ordinateur est exécuté sur un ordinateur.

**8.** Support de données lisible par ordinateur contenant un code de programme d'un programme d'ordinateur pour réaliser le procédé de l'une quelconque des revendications 1 à 5 lorsque le programme d'ordinateur est exécuté sur un ordinateur.

Fig. 1

Fig. 2

**Fig. 3**

**Fig. 4**

**Fig. 5**

**Fig. 6**

Fig. 7

Fig. 8

Fig. 9

Fig. 10

Fig. 11

Fig. 12

**EP 3 907 675 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN**. *A copula-based approach for estimating the travel time reliability of urban arterial*